(19) **Europäisches Patentamt**
**European Patent Office**
**Office européen des brevets**

(11) **EP 2 486 974 A1**

(12) **EUROPÄISCHE PATENTANMELDUNG**

(43) Veröffentlichungstag:
**15.08.2012 Patentblatt 2012/33**

(21) Anmeldenummer: **11153944.1**

(22) Anmeldetag: **10.02.2011**

(51) Int Cl.:
*B01D 71/26* (2006.01)    *B01D 71/28* (2006.01)
*B01D 71/32* (2006.01)    *B01D 71/36* (2006.01)
*B01D 71/40* (2006.01)    *B01D 71/42* (2006.01)
*C08F 2/22* (2006.01)    *B01D 71/82* (2006.01)
*B01D 67/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH**
**51369 Leverkusen (DE)**

(72) Erfinder:
• **Mechelhoff, Martin Dr.**
**50823 Köln (DE)**
• **Früh, Thomas Dr.**
**67112 Mutterstadt (DE)**
• **Kohl, Christopher Dr.**
**55127 Mainz (DE)**
• **Wu, Xiaoping**
**Abingdon, OX14 1XN (GB)**
• **Boam, Andrew**
**London, W4 4DE (GB)**

(54) **Filtrationsmembran**

(57) Die Erfindung betrifft eine Nanofiltrationsmembran mit einer porösen Stützmembran, wobei die Oberfläche der Stützmembran mit durch Emulsionspolymerisation hergestellten Polymerteilchen mit einem mittleren Teilchendurchmesser kleiner als 70 nm, bevorzugt zwischen 30-60 nm, besonders bevorzugt zwischen 40 - 50 nm, beschichtet ist.

EP 2 486 974 A1

**Beschreibung**

Die Erfindung betrifft Nanofiltrationsmembranen mit einer porösen Stützmembran, ein Verfahren zur Herstellung dieser Membran und deren Verwendung.

In der chemischen Industrie, Lebensmittelindustrie, Getränkeindustrie, Elektronikindustrie und in der pharmazeutischen Industrie werden zum Beispiel Membranen für die Trennung von Fest-Flüssig-Gemischen und Flüssigkeiten eingesetzt. Im Hinblick auf die Umwelttechnologie werden diese auch bei der Aufreinigung von Abwässern und der Herstellung von Trinkwasser eingesetzt.

Aus dem Stand der Technik sind verschiedene Membrantrennverfahren bekannt. Zu nennen sind die Mikrofiltration, die Ultrafiltration und die Nanofiltration, sowie die Umkehrosmose. Diese Verfahren sind den mechanischen Trennprozessen zuzuordnen. Die Trennmechanismen sind durch unterschiedliche Membranstrukturen bedingt. Dabei trennen sie mittels Membranporen, deren Durchmesser kleiner als die der abzutrennenden Teilchen sind.

Ein weiterer wesentlicher Mechanismus bei der Separation mit Nanofiltrations- und Umkehrosmosemembranen sind neben sterischen Effekten auch die elektrostatische Wechselwirkung von Ionen in Lösung bzw. teilweise dissoziierten Kohlenwasserstoffen mit entsprechenden geladenen Gruppen auf der Oberfläche einer Membran in wässriger Lösung. Diese Wechselwirkung ermöglicht eine Trennung zweier Substanzen mit ähnlich großem Partikelradius, aber unterschiedlicher Ladung bzw. Wertigkeit. Ebenso kann eine Trennung bei Membranen mit entsprechend kleinen Poren, wie z.B. für die Nanofiltration oder Umkehrosmose, auf der unterschiedlichen Diffusionsneigung bei der Permeation durch die Membran der in einer Lösung vorliegenden Substanzen basieren.

Bekannte Verfahren für die Behandlung von Flüssigkeiten unter Druck sind Mikrofiltration, Ultrafiltration und Nanofiltration. Die Porengröße der Nano-, Ultra- und Mikrofiltrationsmembranen liegen bei ca. 0,001 $\mu$m bis 10,0 $\mu$m.

Zur Charakterisierung von Membranen wird meist der Rückhalt R bezüglich eines Stoffes herangezogen.

$$R = \frac{w(Feed) - w(Permeat)}{w(Feed)} \times 100 \qquad [\%]$$

wobei w den Massenanteil eines beliebigen Stoffes kennzeichnet.

Der Rückhalt beschreibt den Prozentanteil einer abgetrennten Substanz im Permeat (lateinisch "permeare" = durchgehen), bezogen auf die Konzentration im Feed. Er ist neben der Temperatur auch vom Transmembrandruck bzw. -fluss und der Konzentration der Ausgangslösung abhängig. Das Retentat (lateinisch "retenere" = zurückhalten) beinhaltet die im Vergleich zum Feed erhöhte Konzentration der abzutrennenden Substanz.

Dies zeigt die Schwierigkeit bei der Beurteilung der Trenneigenschaften einer Membran. Eine grobe Klassifizierung der Membranen ist oft durch die molekulare Trenngrenze (Cut-off) zusammen mit dem Durchfluss gegeben. Diese Trenngrenze ist gleichbedeutend mit der Molmasse, für welche die Membran einen Rückhalt von mindestens 90 % aufweist und kann besonders im Bereich der Nanofiltration abhängig vom Molekularaufbau der abzutrennenden Stoffe sehr unterschiedlich verlaufen. Der Cut-off von Nanofiltrationsmembranen liegt üblicherweise bei < 1500 g/mol. Ultrafiltrationsmembranen haben üblicherweise einen Cut-off von < ca. 150 000 g/mol.

Ebenfalls bekannt sind Membranen auf der Basis organischer Polymere, die für Trennungen auf Molekularebene, wie z.B. der Trennung von Gasen, der Pervaporation und/oder der Dampfpermeation verwendet werden. Nachteilig bei diesen Polymermembranen ist allerdings deren kurze Lebensdauer, bedingt durch die Empfindlichkeit der Polymermembranen gegenüber Lösungsmitteln, die das Membranmaterial quellen lassen oder zerstören. Des Weiteren stellt die relativ niedrige Temperaturbeständigkeit der gängigen Polymermembranen ein Problem dar.

Häufig werden auch keramische Membranen eingesetzt, die eine erheblich größere Lebensdauer aufweisen, da sie, je nach Zusammensetzung, gegenüber organischen Verbindungen, Säuren oder Laugen weitestgehend inert sind und darüber hinaus eine höhere Temperaturbeständigkeit als Polymerwerkstoffe aufweisen. Demnach können sie auch für Trennaufgaben in chemischen Prozessen, wie z.B. in der Dampfpermeation, eingesetzt werden. Derartige keramische Membranen werden üblicherweise nach der sogenannten Sol-Gel-Methode oder nach dem Dip-Coating-Verfahren so hergestellt, dass insgesamt ein mehrlagiges System keramischer Schichten unterschiedlicher Dicken und Porenweiten produziert wird, wobei die oberste Lage, welche die eigentliche Trennaufgabe übernimmt, die kleinsten Poren besitzt und möglichst dünn aufgebaut sein soll. Durch die geringe Elastizität keramischer Werkstoffe sind keramische Membranen empfindlich gegenüber mechanischer Belastung und brechen leicht. Sie können im Gegensatz zu Polymermembranen nicht gerollt werden, um platzsparende Wickelmodule herzustellen.

Generell ist zu sagen, dass bei allen bekannten Membran-Synthesemethoden ein Hauptproblem darin liegt, die Einstellung der Porengröße und der Porenform der trennaktiven Schicht exakt und einheitlich zu steuern und somit eine sehr enge Porengrößenverteilung zu erzielen.

Polymere Membranen aus den verschiedensten Polymeren sind für weite pH-Bereiche und viele Anwendungen relativ kostengünstig erhältlich, jedoch sind sie meistens nicht beständig gegenüber organischen Lösungsmitteln sowie bei sehr hohen und/oder sehr niedrigen pH-Werten. Auch ist eine dauerhafte Temperaturbeständigkeit bei über 80°C selten gegeben. Es gibt zwar viele Ansätze, die diese Eigenschaften an Polymermembranen verbessern sollen, jedoch ist oft eine der o. a. Anforderungen nicht erfüllt. Zudem sind die meisten Polymere bei höheren Temperaturen plastisch verformbar. Dies bewirkt eine Kompaktierung der gesamten Membrane, wenn diese unter Druck bei höheren Temperaturen betrieben wird. Bei der Kompaktierung führt es dazu, dass das Porengefüge einer Membran komplett zusammengedrückt wird und somit der Filtrationswiderstand stark vergrößert wird. Der Flussabfall wird somit induziert. Ein weiterer Nachteil der üblichen Polymerwerkstoffe ist die schlechte Beständigkeit gegenüber organischen Lösungsmitteln oder Ölen und die weichmachende Wirkung der Öle auf die Polymere. Dadurch wird das Trennvermögen der Membranen beeinträchtigt.

Bei der Reinigung von Flüssigkeitsgemischen spielt die Membrantechnik eine bedeutende Rolle. Insbesondere bei der Gewinnung von Trinkwasser aus Meerwasser mittels Umkehrosmose und bei der Produktaufarbeitung werden zunehmend Ultra- und Nanofiltrationstechniken bzw. Umkehrosmosemembranen eingesetzt.

In Membranprozessen werden in der Regel verdünnte Lösungen aufkonzentriert und organische Lösungsmittel, Wasser- oder Salzlösungen abgetrennt. Dabei werden entweder Wertstoffe oder Schadstoffe in konzentrierteren und gegebenenfalls salzärmeren Lösungen erhalten, wodurch sich nachfolgende Lagerung, Transport, Entsorgung und Weiterverarbeitung kostengünstiger gestalten lassen. Insbesondere bei der Abwasseraufarbeitung ist es das Ziel der Membranbehandlung, den größten Teil des Volumens als Permeat in eine nicht oder nur gering belasteten Form zu gewinnen. Das aufkonzentrierte Retentat kann mit geringerem Aufwand bezüglich noch vorhandener Wertstoffe aufgearbeitet oder in dieser konzentrierten Form, beispielsweise durch Verbrennung, kostengünstiger entsorgt werden.

Das Gebiet der Membranverfahren umfasst sehr unterschiedliche Prozesse. Dementsprechend sind auch unterschiedliche Membranen und deren technische Bauformen vorhanden. Technisch relevante Membrantrennverfahren werden überwiegend als Querstromfiltrationen betrieben. Hohe Schubspannungen, bedingt durch hohe Strömungsgeschwindigkeiten und spezielle Modulkonstruktionen, sollen die Membranverschmutzung minimieren und die Konzentrationspolarisation verringern.

Kommerziell verfügbare Nanofiltrationsmembranen sind Kompositmembranen, die mit Hilfe der Phasengrenzflächenkondensation hergestellt werden, wie beispielsweise in der US 5,049,167 beschrieben ist. Diese bekannten Membranen können jedoch nur sehr aufwendig und nur unter Einhaltung von kostenträchtigen Sicherheitsmaßnahmen hergestellt werden, da als Edukte z. B. kanzerogene Diamine und hochreaktive Acrylchloride eingesetzt werden. Solche Membranen können vielseitig konfiguriert sein, beispielsweise als Flachfolienmodule, Kassettenmodule, spiralgewickelte Module oder Hohlfasermodule.

Weiterhin können kommerzielle Filtrationsmembranen meist nur bei Prozesstemperaturen bis ca. 80°C eingesetzt werden.

Aufgabe der vorliegenden Erfindung ist es daher, eine leistungsfähige Nanofiltrationsmembran bereitzustellen, die eine hohe thermische Belastbarkeit, eine gute Stabilität in organischen und anorganischen Lösungsmitteln sowie bei hohen und niedrigen pH-Werten und zudem gute Trenneigenschaften auf der Basis einer geeigneten Oberflächenmodifizierung aufweist. Eine weitere Aufgabe der Erfindung ist auch die Bereitstellung eines Verfahrens, mit dem es möglich ist, definierte Porengrößen für die jeweiligen Membranen herzustellen.

Aus dem Stand der Technik ist bekannt, dass Polymerteilchen auf einem porösen Substrat, das eine breitere Porengrößenverteilung besitzt, zum Erhalt einer Verbundmembran mit einer schmaleren Porengrößenverteilung abgelagert werden können. Die Hohlräume zwischen den Teilchen bilden Poren, mit denen eine Trennung aus einer Flüssigkeit heraus durchgeführt werden kann. Die so erhaltenen Verbundmembranen können beispielsweise als Ultrafiltrations- und Mikrofiltrationsmembranen verwendet werden.

Zur Lösung der Aufgabe wird daher eine Nanofiltrationsmembran der eingangs genannten Art bereitgestellt, wobei die Oberfläche der Stützmembran mit durch Emulsionspolymerisation hergestellten Polymerteilchen mit einem mittleren Teilchendurchmesser < 70nm, bevorzugt zwischen 30 bis 65 nm, besonders bevorzugt zwischen 40 bis 50 nm, beschichtet ist.

Es ist hier zwischen der Filtrationseigenschaft einer Membran, charakterisiert z.B. durch den Cut-off, und dem Aufbau der Filtrationsmembran zu unterscheiden.

Unter Nanofiltrationsmembran wird im Weiteren die Verwendung von Polymerteilchen im Teilchendurchmesserbereich ≤ 100 nm zur Herstellung derselbigen verstanden. "Nanofiltrationsmembran" impliziert nicht deren Trenneigenschaften.

Trennwirkung, Trenneigenschaften, Trennverhalten werden als Synonyme verwandt. Die Trennwirkung wird mit Hilfe des o. g. Cut-off definiert.

Polymerteilchen und Nanopartikel werden hierbei als Synonyme verwandt.

Der Einsatz von durch Emulsionspolymerisation hergestellter Polymerteilchen mit einem mittleren Teilchendurchmesser <70 nm, bevorzugt zwischen 30 bis 65 nm, besonders bevorzugt zwischen 40 und 50 nm, bietet gegenüber anderen Polymerteilchen zahlreiche Vorteile, da die chemischen und physikalischen Eigenschaften der Polymerteilchen, wie Teilchengröße, Teilchenmorphologie, Quellverhalten, Katalyseaktivität, Härte, Formstabilität, Klebrigkeit, Oberflächenenergie, Alterungsbeständigkeit und Schlagzähigkeit eingestellt werden können. Dies geschieht einerseits durch den Herstellungsprozess, insbesondere durch das Polymerisationsverfahren, sowie durch die Auswahl geeigneter Basismonomere und andererseits durch die Auswahl geeigneter funktioneller Gruppen, deren Konzentration und Ansiedlungsbereich im Polymerteilchen in weiten Grenzen gezielt eingestellt bzw. maßgeschneidert werden können.

Die trennaktive Schicht ist somit die mit durch Emulsionspolymerisation hergestellten Polymerteilchen mit einem mittleren Teilchendurchmesser < 70nm, bevorzugt zwischen 30 bis 65 nm, besonders bevorzugt zwischen 40 bis 50 nm, erzeugte Schicht, auch als Polymerschicht bezeichnet, der erfindungsgemäßen Nanofiltrationsmembran.

Unter Emulsionspolymerisation wird insbesondere ein an sich bekanntes Verfahren verstanden, bei dem als Reaktionsmedium meist Wasser verwendet wird, worin die verwendeten Monomere in Anwesenheit oder Abwesenheit von Emulgatoren und radikalbildenden Substanzen unter Bildung von meist wässrigen Polymerlatices polymerisiert werden (s. u.a. Römpp Lexikon der Chemie, Band 2, 10. Auflage 1997; P. A. Lovell, M. S. El-Aasser, Emulsion Polymerization and Emulsion Polymers, John Wiley & Sons, ISBN: 0471 96746 7; H. Gerrens, Fortschr. Hochpolym. Forsch. 1, 234 (1959)). Die Emulsionspolymerisation liefert im Unterschied zur Suspensions- oder Dispersionspolymerisation in der Regel feinere Teilchen, welche einen geringeren Zwickeldurchmesser und somit kleinere Porengrößen in der trennaktiven Schicht ermöglichen. Teilchen einer Größe von unterhalb 500 nm sind durch Suspensions- oder Dispersionspolymerisation im Allgemeinen nicht zugänglich, weshalb diese Teilchen in der Regel für die Zwecke dieser Patentanmeldung ungeeignet sind.

Überraschend wurde nun gefunden, dass durch die Auswahl bestimmter Polymerteilchen die Verwendung zusätzlicher thermischer oder chemischer Mittel zur Stabilisierung der erfindungsgemäßen Nanofiltrationsmembran nicht mehr erforderlich ist.

Durch die Wahl der Monomere stellt man die Glasübergangstemperatur und die Breite des Glasübergangs der Polymerteilchen ein. Die Bestimmung der Glasübergangstemperatur (Tg) und der Breite des Glasübergangs ($\Delta$Tg) der Polymerteilchen erfolgt mittels Differential-Scanning-Kalorimetrie (DSC), bevorzugt wie im Folgenden beschrieben. Dazu werden für die Bestimmung von Tg und $\Delta$Tg zwei Abkühl/Aufheiz-Zyklen durchgeführt. Tg und $\Delta$Tg werden im zweiten Aufheiz-Zyklus bestimmt. Für die Bestimmungen werden etwa 10-12 mg des ausgewählten Polymerteilchens in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100°C abgekühlt und dann mit einer Geschwindigkeit von 20K/min auf +150°C aufgeheizt wird. Der zweite DSC-Zyklus wird durch sofortige Abkühlung der Probe begonnen, sobald eine Probentemperatur von +150°C erreicht ist. Im zweiten Aufheizzyklus wird die Probe wie im ersten Zyklus noch einmal auf +150°C aufgeheizt. Die Aufheizgeschwindigkeit im zweiten Zyklus ist erneut 20K/min. Tg und $\Delta$Tg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC-Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glasübergangstemperatur Tg erhält man als Mittelwert dieser beiden Temperaturen und die Breite des Glasübergangs $\Delta$Tg erhält man aus der Differenz der beiden Temperaturen.

Vorzugsweise weisen die Polymerteilchen eine Glasübergangstemperatur (Tg) von -85°C bis 150° C, bevorzugt -75°C bis 110°C, besonders bevorzugt -70 °C bis 90°C, auf.

Die Breite des Glasübergangs ist bei den erfindungsgemäß verwendeten Polymerteilchen bevorzugt größer als 5 °C, bevorzugter größer als 10°C.

Bevorzugt sind die durch Emulsionspolymerisation hergestellten Polymerteilchen kautschukartig.

Kautschukartige Polymerteilchen sind bevorzugt solche auf Basis von konjugierten Dienen wie z. B. Butadien, Isopren, 2-Chlorbutadien und 2,3-Dichlorbutadien, Vinylacetat, Styrol oder Derivate davon, 2-Vinylpyridin und 4-Vinylpyridin, Acrylnitril, Acrylamide, Methacrylamide, Tetrafluorethylen, Vinylidenfluorid, Hexafluorpropen, doppelbindungshaltige Hydroxy-, Epoxy, Amino-, Carboxy-, und Ketoverbindungen.

Bevorzugte Monomere bzw. Monomerkombinationen schließen ein: Butadien, Isopren, Acrylnitril, Styrol, alpha-Methylstyrol, Chloropren, 2,3-Dichlorbutadien, Butylacrylat, 2-Ethylhexylacrylat, Hydroxyethylmethacrylat, Glycidylmethacrylat, Acrylsäure, Diacetonacrylamid, Tetrafluorethylen, Vinylidenfluorid und Hexafluorpropen.

"Auf Basis" bedeutet hier, dass die Polymerteilchen bevorzugt zu mehr als 60 Gew.-%, bevorzugt mehr als 70 Gew.-%, bevorzugter zu mehr als 90 Gew.-% aus den genannten Monomeren bestehen.

Die Polymerteilchen können vernetzt oder unvernetzt sein. Die Polymerteilchen können insbesondere solche auf Basis von Homopolymeren oder statistischen Copolymeren sein. Die Begriffe Homopolymere und statistische Copolymere sind dem Fachmann bekannt und beispielsweise erläutert bei Volhnert, Polymer Chemistry, Springer 1973.

Als Polymerbasis der kautschukartigen, vernetzten oder unvernetzten Polymerteilchen, enthaltend funktionale Gruppen, können insbesondere dienen:

BR:        Polybutadien,

ABR: Butadien/Acrylsäure-$C_{1-4}$Alkylestercopolymere,

IR: Polyisopren,

SBR: statistische Styrol-Butadien-Copolymerisate mit Styrolgehalten von 1-60, vorzugsweise 5-50 Gewichtsprozent,

FKM: Fluorkautschuk,

ACM: Acrylatkautschuk,

NBR: Polybutadien-Acrylnitril-Copolymerisate mit Acrylnitrilgehalten von 5-60, vorzugsweise 10- 60 Gewichtsprozent,

CR: Polychloropren

EAM: Ethylen/Acrylatcopolymere,

EVM: Ethylen/Vinylacetatcopolymere.

Weitere bevorzugte Polymerteilchen sind thermoplastisch und solche auf Basis von Methacrylaten, insbesondere Methylmethacrylat, Styrol, alpha-Methylstyrol und Acrylnitril.

Die Polymerteilchen weisen bevorzugt eine annähernd kugelförmige Geometrie auf.

Die erfindungsgemäß verwendeten Polymerteilchen weisen einen mittleren Teilchendurchmesser kleiner als 70 nm, zwischen 30 bis 65 nm, besonders bevorzugt zwischen 40 bis 50 nm auf.

Der mittlere Teilchendurchmesser wird mittels Ultrazentrifugation mit dem wässrigen Latex der Polymerteilchen aus der Emulsionspolymerisation bestimmt. Die Methode liefert einen Mittelwert für den Teilchendurchmesser unter Berücksichtigung etwaiger Agglomerate. (H. G. Müller (1996) Colloid Polymer Science 267: 1113-1116 sowie W. Scholtan, H. Lange (1972) Kolloid-Z u. Z. Polymere 250: 782). Die Ultrazentrifugation hat den Vorteil, dass die gesamte Teilchengrößenverteilung charakterisiert wird und verschiedene Mittelwerte wie Zahlenmittel, Gewichtsmittel aus der Verteilungskurve berechnet werden können. Die erfindungsgemäß verwendeten mittleren Durchmesserangaben beziehen sich auf das Gewichtsmittel. Es können Durchmesserangaben wie $d_{10}$, $d_{50}$ und $d_{80}$ verwendet werden. Diese Angaben bedeuten, dass 10, 50 bzw. 80 Gew. % der Teilchen einen Durchmesser besitzen, der kleiner als der entsprechende Zahlenwert in Gew. % ist.

Die Durchmesserbestimmung mittels dynamischer Lichtstreuung wird am Latex durchgeführt. Üblich sind Laser, die bei 633 nm (rot) und bei 532 nm (grün) arbeiten. Bei der dynamischen Lichtstreuung erhält man einen Mittelwert der Partikelgrößenverteilungskurve. Die erfindungsgemäß verwendeten mittleren Durchmesserangaben beziehen sich auf diesen Mittelwert.

Die Teilchen werden durch Emulsionspolymerisation hergestellt, wobei durch Variation der Einsatzstoffe wie Emulgatorkonzentration, Initiatorkonzentration, Flottenverhältnis von organischer zu wässriger Phase, Verhältnis von hydrophilen zu hydrophoben Monomeren, Menge an vernetzendem Monomer, Polymerisationstemperatur etc. die Teilchengröße in einem weiten Durchmesserbereich eingestellt wird.

Nach der Polymerisation werden die Latices durch Vakuumdestillation oder durch Strippung mit überhitztem Wasserdampf behandelt, um flüchtige Komponenten insbesondere nicht umgesetzte Monomeren abzutrennen.

Auf eine weitere Aufarbeitung der so hergestellten Polymerteilchen, z.B. durch Koagulationsverfahren, kann verzichtet werden.

Die erfindungsgemäß verwendeten durch Emulsionspolymerisation hergestellten Polymerteilchen sind in einer bevorzugten Ausführungsform mindestens teilweise vernetzt.

Die Vernetzung der durch Emulsionspolymerisation hergestellten Polymerteilchen erfolgt bevorzugt durch den Zusatz von polyfunktionellen Monomeren bei der Polymerisation, wie z.B. durch den Zusatz von Verbindungen mit mindestens zwei, vorzugsweise 2 bis 4 copolymerisierbaren C=C-Doppelbindungen, wie Düsopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid), Triallyltrimellitat, Gylcidylmethacrylat, Acrylate und Methacrylate von mehrwertigen, vorzugsweise 2- bis 4- wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit sowie ungesättigten Polyestern aus aliphatischen Di- und Polyolen und Maleinsäure, Fumarsäure, und/oder Itaconsäure.

Die Vernetzung der Polymerteilchen kann direkt während der Emulsionspolymerisation, wie durch Copolymerisation mit vernetzend wirkenden multifunktionellen Verbindungen oder durch anschließende Vernetzung wie untenstehend beschrieben erreicht werden. Die direkte Vernetzung während der Emulsionspolymerisation ist bevorzugt. Bevorzugte multifunktionelle Comonomere sind Verbindungen mit mindestens zwei, vorzugsweise 2 bis 4 copolymerisierbaren C=C-Doppelbindungen, wie Düsopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von aliphatischen Aminen, Epoxiden und mehrwertigen, vorzugsweise 2- bis 4-wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Die Vernetzung während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Polymerteilchen im Anschluss an die Emulsionspolymerisation setzt man am besten die Latices ein, die bei der Emulsionspolymerisation erhalten werden.

Geeignete, vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Ditmethylhexan-2,5-dihydroperoxid, 2,5-Dimethylhexin-3,2,5-dihydroper-oxid, Dibenzoylperoxid, Bis-(2,4-dichlorobenzoyl)peroxid, t-Butylperbenzoat sowie organische Azoverbindungen, wie Azo-bis-isobutyronitril und Azo-bis-cyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid.

Die optimale Temperatur zur Durchführung der Nachvernetzung ist naturgemäß von der Reaktivität des Vernetzers abhängig und kann bei Temperaturen von Raumtemperatur bis ca. 180 °C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Polymerteilchen kann auch in Dispersion bzw. Emulsion bei gleichzeitiger, partieller, ggf. vollständiger, Hydrierung der C=C Doppelbindung durch Hydrazin wie in US 5,302,696 oder US 5,442,009 beschrieben oder ggf. andere Hydrierungsmittel, beispielsweise Organometallhydridkomplexe erfolgen.

Vor, während oder nach der Nachvernetzung kann ggf. eine Teilchenvergrößerung durch Agglomeration durchgeführt werden.

Die erfindungsgemäß eingesetzten vernetzten Polymerteilchen weisen zweckmäßig in Toluol bei 23°C unlösliche Anteile (Gelgehalt) von mindestens etwa 70 Gew.-%, bevorzugter mindestens etwa 80 Gew.-%, besonders bevorzugt 90 Gew.-%, noch bevorzugter mindestens etwa 98 Gew.-% auf. Der in Toluol unlösliche Anteil wird dabei in Toluol bei 23° bestimmt. Hierbei werden 250 mg der Polymerteilchen in 25 ml Toluol 24 Stunden unter Schütteln bei 23°C gequollen. Nach Zentrifugation mit 20.000 Upm wird der unlösliche Anteil abgetrennt und getrocknet. Der Gelgehalt ergibt sich aus dem Quotienten des getrockneten Rückstandes und der Einwaage und wird in Gewichtsprozent angegeben.

Die eingesetzten vernetzten Polymerteilchen weisen weiterhin zweckmäßig in Toluol bei 23°C einen Quellungsindex von weniger als etwa 80, bevorzugter von weniger als 60 noch bevorzugter von weniger als 40 auf. So können die Quellungsindizes der Polymerteilchen (Qi) besonders bevorzugt zwischen 1-20 und 1-10 liegen. Der Quellungsindex wird aus dem Gewicht der in Toluol bei 23° für 24 Stunden gequollenen lösungsmittelhaltigen Polymerteilchen (nach Zentrifugation mit 20.000 Upm) und dem Gewicht der trockenen Polymerteilchen berechnet:

Qi = Nassgewicht der Polymerteilchen / Trockengewicht der Polymerteilchen.

Zur Ermittlung des Quellungsindex lässt man 250 mg der Polymerteilchen in 25 ml Toluol 24 h unter Schütteln quellen. Das Gel wird abzentrifugiert und gewogen und anschließend bei 70 °C bis zur Gewichtskonstanz getrocknet und nochmals gewogen.

Vorzugsweise besteht die Stützmembran aus einem anorganischen oder organischen Material.

Darüber hinaus ist es vorteilhaft, dass die Stützmembran chemisch und/oder mechanisch stabil ist. Sie soll pH-Wert-stabil sein und ebenso in organischen Lösungsmitteln, wie beispielsweise Aldehyde, Ketone, ein- und mehrwertige Alkohole, Benzolderivate, halogenierte Kohlenwasserstoffe, Ether, Ester, Carbonsäuren, cyclische Kohlenwasserstoffe, Amine, Amide, Lactame, Lactone, Sulfoxide, Alkane, Alkene.

Vorzugsweise wird eine Stützmembran gewählt, welche in folgenden Lösungsmitteln chemisch stabil ist: Aceton, Toluol, Benzol, Wasser, Tetrahydrofuran, Dimethylformamid, Dimethylsulfoxid, N-Methylpyrrolidon, N-Ethylpyrrolidon, Pyridin Methanol, Ethanol, Propanol, Isopropanol, Butanol, Isobutanol, Pentan, Hexan, Heptan, Octan, Nonan, Decan, Methylethylketon, Diethylether, Dichlormethan, Tetrachlorethan, Tetrachlorkohlenstoff, Methyltertiärbutylether, Chlorbenzol, Dichlorbenzol, Trichlorbenzol, Nitrobenzol, Ethylacetat, Cyclohexan.

Es wurde festgestellt, dass die erfindungsgemäße Nanofiltrationsmembran insbesondere auch im pH-Bereich von 10-14 und/oder 1-4 stabil ist.

Für die Anwendung der Membran ist es darüber hinaus sinnvoll, dass die Stützmembran aus einem Material besteht, welches sowohl bei Raumtemperatur als auch in typischen Anwendungsprozesstemperaturen temperaturstabil ist. Eine Temperaturstabilität von 50 bis 200°C, bevorzugt zwischen 70 und 150°C sowie 80 bis 120°C ist ebenso vorstellbar.

Als anorganische, stoffdurchlässige Stützmembran sind beispielsweise Mikroglasfaservliese, Metallvliese, dichte Glasfasergewebe oder Metallgewebe, aber auch Keramik- oder Kohlefaser-Vliese oder -Gewebe einsetzbar. Dem Fachmann ist klar, dass hier auch alle anderen bekannten, vorzugsweise flexiblen, mit offenen Poren oder Öffnungen in der entsprechenden Größe versehenen Materialien als Stützmembranen verwendet werden können. Auch keramische Verbundwerkstoffe können eingesetzt werden, wie etwa anorganische Trägermaterialien eines Oxids ausgewählt aus $Al_2O_3$, Titanoxid, Zirkoniumoxid oder Siliziumoxid. Ebenso bevorzugt weist die anorganische Stützmembran ein Material, ausgewählt aus Keramik, SiC, $Si_3N_4$, Kohlenstoff, Glas, Metall oder Halbmetall, auf. Des Weiteren können organische Polymermaterialien, die eine ausreichende chemische und thermische Beständigkeit aufweisen, als Stützmembran verwendet werden, wie Polyimid, Polytetraflourethylen, Polyvinylidenfluorid, Polyetherimid, Polyetherketon, Polyetheretherketon, Polyethersulfon, Polybenzimidazol, Polyamid.

Vorzugsweise weisen die Stützmembranen eine Porenweite von weniger als 500 nm auf. Besonders bevorzugt weisen sie eine Porenweite von weniger als 100 nm und ganz besonders bevorzugt von weniger als 50 nm.

Besonders bevorzugt ist die Porengröße der Stützmembran kleiner als der mittlere Teilchendurchmesser der Polymerteilchen.

Vorzugsweise weist die Dicke der Stützmembran 5 bis 100 $\mu$m auf, besonders bevorzugt von 20 bis 80 $\mu$m, ganz besonders bevorzugt von 30 bis 60 $\mu$m.

Bevorzugt sind die durch Emulsionspolymerisation hergestellten Polymerteilchen mindestens teilweise durch den Zusatz von polyfunktionellen Monomeren bei der Polymerisation funktionalisiert sind. Dabei können die polyfunktionellen Monomere aus der Gruppe ausgewählt werden, die besteht aus: Verbindungen mit mindestens zwei, vorzugsweise 2 bis 4 copolymerisierbaren C=C-Doppelbindungen, wie Düsopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid), Triallyltrimellitat, Acrylate und Methacrylate von aliphatischen Aminen, Epoxiden und mehrwertigen, vorzugsweise 2- bis 4- wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit sowie ungesättigten Polyestern aus aliphatischen Di- und Polyolen und Maleinsäure, Fumarsäure, und/oder Itaconsäure. Bevorzugt weist die trennaktive Schicht der erfindungsgemäßen Nanofiltrationsmembran mindestens eine Monolage der Polymerteilchen mit dem mittleren Teilchendurchmesser < 70nm, bevorzugt zwischen 30 bis 65 nm, besonders bevorzugt zwischen 40 bis 50 auf.

Eine bevorzugte Ausführung der erfindungsgemäßen Nanofiltrationsmembran weist eine trennaktive Schicht mit 0.1 bis 20 $\mu$m Dicke auf, wobei hier mehrere Lagen der Polymerteilchen aufeinander liegen.

Vorzugsweise ist die Dicke der trennaktiven Schicht höchstens so dick wie die Stützmembran.

Eine weitere Erfindung ist das Herstellungsverfahren der erfindungsgemäßen Nanofiltrationsmembran, wobei eine Dispersion (Latex) von durch Emulsionspolymerisation hergestellten Polymerteilchen auf die Stützmembran aufgebracht und eine Polymerschicht (trennaktive Schicht) auf der Stützmembran ausgebildet wird.

Es wurde festgestellt, dass die verwendete Dispersion weitestgehend monodispers ist, d. h. nach der Methode der dynamischen Lichtstreuung liegen 95,4 % der Polymerteilchen in einer Größenklasse mit einer Abweichung von $\pm$ 7 nm vor.

Vorzugsweise wird das Verfahren kontinuierlich durchgeführt.

Bevorzugt weist die wässrige Dispersion Polymerteilchen mit mittleren Teilchendurchmesser < 70 nm, bevorzugt zwischen 30 bis 65 nm, besonders bevorzugt zwischen 40 bis 50 auf, wobei der Trockenkautschukgehalt (Dry Rubber Content) nach der Polymerisation mindestens 20 %, bevorzugt mindestens 25 %, besonders bevorzugt mindestens 30 %, bezogen auf das Gesamtvolumen des Polymerisats aufweist.

Die Aufkonzentrierung der Latices auf einen Trockenkautschukgehalt von maximal 65 % bezogen auf das Gesamtvolumen des Polymerisats ist zur Herstellung ebenso vorstellbar.

Die Bestimmung des Trockenkautschukgehalts (Dry Rubber Content) wird wie folgt durchgeführt: Der Trockenkautschukgehalt wird mit einem Halogenfeuchtigkeitsmessgerät bestimmt, wie z.B. dem Mettler Toledo Halogen Moisture Analyzer HG63. Hierbei wird ein Latex bei einer Temperatur von 140°C getrocknet und kontinuierlich gewogen. Die Messung gilt als beendet, wenn der Gewichtsverlust weniger als 1 mg/50 sec beträgt.

Vorzugsweise beträgt der Trockenkautschukgehalt nach der Polymerisation maximal 65 %, bezogen auf das Gesamtvolumen des Polymerisats.

Vorzugsweise wird der Latex mit den Polymerteilchen mittels einer Düse auf die Stützmembran aufgebracht.

In einem nachfolgenden Schritt wird die so ausgebildete Nanofiltrationsmembran getrocknet. Vorstellbar kann man die so ausgebildete Nanofiltrationsmembran zusätzlich vernetzen, wodurch die Polymerteilchen miteinander und/oder mit der Stützmembran verbunden werden. Es kommen üblicherweise chemische (kovalent und/oder ionisch) sowie physikalische Vernetzungsarten zur Anwendung ausgelöst durch elektromagnetische (z.B. UV), thermische und/oder radioaktive Strahlung. Alle herkömmlichen Vernetzungshilfsmittel können eingesetzt werden.

Dadurch wird die Porengröße nochmals verkleinert und die Filtrationseigenschaften werden modifiziert.

Eine weitere Erfindung ist die Verwendung von durch Emulsionspolymerisation hergestellten Polymerteilchen mit mittleren Teilchendurchmessern < 70 nm, bevorzugt zwischen 30 bis 65 nm, besonders bevorzugt zwischen 40 bis 50 zur Herstellung einer Nanofiltrationsmembran.

Ebenso eine Erfindung ist die Verwendung der Nanofiltrationsmembran für die Lebensmittelindustrie, für die chemische Industrie und für die biochemische Industrie. Diese Aufzählung ist nicht limitierend.

Nachstehend wird die Erfindung anhand von Beispielen näher erläutert:

**BEISPIELE:**

**Herstellung der Polymerteilchen Typ 1 und 2**

Für die Herstellung der Polymerteilchen wurden folgende Einsatzstoffe verwendet. In der Tabelle 1 werden Rezepturbestandteile auf 100 Gew.-Teile der Monomermischung bezogen.

**Monomere**

    1) Butadien (99%ig, entstabilisiert) der Lanxess Deutschland GmbH

    2) Acrylnitril (99%ig stabilisiert mit Hydrochinonmonomethylether), der Merck KGaA

    3) Styrol (98%ig) von KMF Labor Chemie Handels GmbH

    4) Trimethylolpropantrimethacrylat (96%ig) von Aldrich; Produktnummer: 24684-0; (Abkürzung: TMPTMA)

    5) Hydroxyethylmethacrylat (97% von Arcos; Abkürzung: HEMA)

**Emulgatoren**

6) Disproportionierte Harzsäure (abgekürzt als HS) - berechnet als freie Säure ausgehend von der Menge eingesetzten Dresinate® 835 (Abieta Chemie GmbH; D-86358 Gersthofen)

Die eingesetzte Dresinate® 835-Charge wurde durch den Feststoffgehalt sowie durch die als Natriumsalz, als freie Säure und als Neutralkörper vorliegenden Emulgatorbestandteile charakterisiert.

Der Feststoffgehalt wurde nach der von Maron, S. H.; Madow, B. P.; Borneman, E. "The effective equivalent weights of some rosin acids and soaps" Rubber Age, April 1952, 71-72 publizierten Vorschrift bestimmt.

Als Mittelwert von drei aliquoten Proben der eingesetzten Dresinate® 835 Charge wurde ein Feststoffgehalt von 71 Gew. % ermittelt.

Die als Natriumsalz und als freie Säure vorliegenden Emulgatoranteile wurden titrimetrisch nach dem von Maron, S. H., Ulevitch, I. N., Elder, M. E. "Fatty and Rosin Acids, Soaps, and Their Mixtures, Analytical Chemistry, Vol. 21, 6, 691-695 beschriebenen Verfahren ermittelt.

Zur Bestimmung wurden (in einem Beispiel) 1,213 g Dresinate® 835 (71%ig) in einer Mischung von 200 g destilliertem Wasser und 200 g destilliertem Isopropanol gelöst, mit einem Überschuss an Natronlauge (5 ml 0,5 N NaOH) versetzt und mit 0,5 N Salzsäure zurücktitriert. Der Titrationsverlauf wurde durch potentiometrische pH-Messung verfolgt. Die Auswertung der Titrationskurve erfolgte wie in Analytical Chemistry, Vol. 21, 6, 691-695 beschrieben.

An drei aliquoten Proben der eingesetzten Dresinate® 835-Charge wurde als Mittelwert erhalten:

| | |
|---|---|
| Gesamtemulgatorgehalt: | $2{,}70 \text{ mmol} / g_{\text{Trockenmasse}}$ |
| Na-Salz: | $2{,}42 \text{ mmol} / g_{\text{Trockenmasse}}$ |
| Freie Säure: | $0{,}28 \text{ mmol} / g_{\text{Trockenmasse}}$ |

Mit Hilfe der Molmassen für das Na-Salz der disproportionierten Abietinsäure (324 g / mol) sowie der Molmasse für die freie disproportionierte Abietinsäure (302 g / mol) wurden die Gewichtsanteile an Na-Salz, freier Säure und nicht erfasster Anteile der eingesetzten Dresinate® 835-Charge berechnet:

| | |
|---|---|
| Natriumsalz disproportionierter Harzsäure: | 78,4 Gew. % |
| Freie disproportionierte Harzsäure: | 8,5 Gew. % |
| Nicht erfasste Anteile (Neutralkörper) | 13,1 Gew. % |

In den folgenden Rezepturen wurden die bei den Polymerisationen eingesetzten Mengen an Dresinate® 835 in freie Säure umgerechnet (abgekürzt als HS) und als Gew.-Anteile bezogen auf 100 Gew.-Anteile Monomere angegeben. Bei dieser Umrechnung wurde der Neutralkörper nicht berücksichtigt.

Zum Nachvollzug der Umrechnung der in der Tabelle 1 angegebenen Mengen an disproportionierter Abietinsäure (HS) auf der Basis der eingesetzten Mengen an Dresinate 835® sei folgende Tabelle 1 angefügt:

Tabelle 1:

| Einwaage an Dresinate® 835 [g Trockenmasse] | Berechnete Menge an disproportionierter Abietinsäure (ohne Neutralkörper) [g Trockenmasse] |
|---|---|
| 0,25 | 0,20 |
| 0,5 | 0,41 |
| 1,0 | 0,82 |
| 1,5 | 1,22 |
| 2,0 | 1,63 |
| 2,5 | 2,04 |
| 3,0 | 2,45 |
| 3,5 | 2,86 |
| 4,0 | 3,26 |
| 4,5 | 3,67 |
| 4,75 | 3,87 |
| 5,0 | 4,08 |
| 7) Teilhydrierte Talgfettsäure - abgekürzt als FS (Edenor® HTiCT N der Firma Cognis Oleo Chemicals) | |

Der Gesamtemulgatorgehalt und das mittlere Molekulargewicht der verwendeten Edenor® HTiCT N-Charge wurden titrimetrisch mit Hilfe der folgenden Methoden bestimmt: Maron, S. H., Ulevitch, I. N., Elder, M. E. "Fatty and Rosin Acids, Soaps, and Their Mixtures, Analytical Chemistry, Vol. 21, 6, 691-695; Maron, S. H.; Madow, B. P.; Borneman, E. "The effective equivalent weights of some rosin acids and soaps" Rubber Age (1952), 71 71-2). Bei der Titration wurde (in einem Beispiel 1,5 g Edenor® HTiCT N in einer Mischung von 200 g destilliertem Wasser und 200 g destilliertem Isopropanol gelöst, mit einem Überschuss an 15 ml NaOH (0,5 mol/1) versetzt und mit 0,5 m Salzsäure zurücktitriert.

Hierbei wurde als Mittelwert von drei aliquoten Teilen der eingesetzten Edenor® HTiCT N-Charge erhalten:

| | |
|---|---|
| Gesamtemulgatorgehalt: | 3,637 mmol / girockenmasse |
| Molmasse (freie Säure): | 274,8 mg / mmol |

In den folgenden Rezepturen wurden die eingesetzten Mengen an teilhydrierter Talgfettsäure (wie kommerziell erhältlich) als "freie Säure = FS" angegeben.

Die Berechnung der zur Einstellung der in den Tabellen angegebenen Neutralisationsgrade erfolgte auf der Basis der titrimetrisch ermittelten Gehalte der verschiedenen Bestandteile der eingesetzten Dresinate® 835- und Edenor® HTiCT N-Chargen. Die Einstellung der Neutraliationsgrade erfolgte mit Kaliumhydroxid.

**Regler**

8) tert-Dodecylmercaptan der Chevron Phillips Chemical Company LP (Sulfole® 120)

Die Herstellung der Polymerteilchen erfolgte durch Emulsionspolymerisation in einem 20 1-Autoklaven mit Rührwerk. Für die Polymerisationsansätze wurde 4,3 kg Monomere mit 0,34 g 4-Methoxyphenol (Arcos Organics, Artikel-Nr. 126001000, 99 %) eingesetzt. Die der Tabelle angegebenen Gesamtemulgator- und Gesamtwassermengen (abzüglich der für die Herstellung der wässrigen Prämix- und p-Menthanhydroperoxidlösungen -siehe unten- benötigten Wassermengen) wurden jeweils zusammen mit den Emulgatoren und den notwendigen Kaliumhydroxid-Mengen im Autoklaven vorgelegt.

Nach Temperierung der Reaktionsmischung auf 15 °C wurden bei den aufgelisteten Polymerisationsansätzen jeweils 50 % frisch hergestellte wässrige Prämixlösungen (4 %ig) in den Autoklaven gegeben. Diese Prämixlösungen bestanden aus:

0,284 g Ethylendiamintetraessigsäure (Fluka, Artikelnummer 03620),

0,238 g Eisen(II)-sulfat * 7 $H_2O$ (Riedel de Haen, Artikelnummer: 12354) (ohne Kristallwasser berechnet)

0,576 g Rongalit C, Na-Formaldehydsulfoxylat-2-hydrat (Merck-Schuchardt, Artikelnummer 8.06455) (ohne Kristallwasser berechnet) sowie

0,874 g Trinatriumphosphat * 12 $H_2O$ (Acros, Artikelnummer 206520010) (ohne Kristallwasser berechnet).

Für die Aktivierung der aufgelisteten Polymerisationen wurden für den styrolhaltigen Typ 5 g und für den acrylnitrilhaltigen Typ 1,7 g p-Menthanhydroperoxid (Trigonox NT 50 der Akzo-Degussa) eingesetzt, die in 200 ml der im Reaktor hergestellten Emulgatorlösung emulgiert wurden. Bei Erreichen von 30 % Umsatz wurden die restlichen 50 % der Prämixlösung zudosiert.

Die Temperaturführung während der Polymerisation erfolgte durch Einstellung von Kühlmittelmenge und Kühlmitteltemperatur in den in den Tabellen angegebenen Temperaturbereichen.

Bei Erreichen eines Polymerisationsumsatzes von mehr als 85 % (üblicherweise: 90 % bis 100 %) wurde die Polymerisation durch Zugabe einer wässrigen Lösung von 2,35 g Diethylhydroxylamin (DEHA, Aldrich, Artikelnummer 03620) abgestoppt.

**Entfernung flüchtiger Bestandteile**

Zur Entfernung flüchtiger Bestandteile aus dem Latex wurde der Latex bei Normaldruck einer Wasserdampfdestillation unterzogen.

Die derart hergestellten Polymerteilchen werden für eine erfindungsgemäße Nanofiltrationsmembran verwendet.

In Tabelle 2 ist die Rezeptur der hergestellten Polymerteilchen dargestellt; es werden folgende Indizes verwendet:

1) Butadien (unstabilisiert)

2) Acrylnitril (99%ig stabilisiert mit Hydrochinonmonomethylether), der Merck KGaA

3) Styrol (stabilisiert mit 100 bis 150 ppm 4-tert.-Butylbrenzkatechin)

4) Trimethylolpropantrimethacrylat (96%ig von Aldrich)

5) Hydroxyethylmethacrylat (97%ig von Arcos)

6) Aus der Menge eingesetzten Dresinates 835 berechnete Menge an disproportionierter Harzsäure (abgekürzt als HS)

7) Edenor HTiCT N der Firma Oleo Chemicals (abgekürzt als FS)

8) tert.-Dodecylmercaptan (Sulfol® 120 von Chevron Phillips)

Die Eigenschaften der hergestellten Teilchen sind in Tabelle 3 dargestellt. **Tabelle 2:**

| Polymer-teilchen Typ | tert-DDM [phm] | Monomere [Gew.-Teile] | | | | | | Emulgatoren [phm] | | | | Wasser | Polymerisations-temperatur | Polymerisationszeit | Umsatz |
|---|---|---|---|---|---|---|---|---|---|---|---|---|---|---|---|
| | 8) | Butadien[1] | Styrol[2] | Acrylnitril[3] | TMPTMA [4] | HEMA[5] | HS[6] | FS[7] | HS / FS | HS + FS | Neutralisations-grad [%] | [phm] | [°C] | [min] | [%] |
| 1 | 0,45 | 58 | - | 38 | 4 | - | 3,67 | 0,44 | 8,34 | 4,11 | 123 | 300 | 15-20 | 340 | 98 |
| 2 | 0,45 | 10,5 | 80,5 | - | 4 | 7,5 | 3,67 | 0,44 | 8,34 | 4,11 | 123 | 300 | 15-20 | 300 | 95 |

**Tabelle 3:**

| Polymerteilchen Typ | Feststoffgehalt (nach Monomer-entfernung) [Gew.%] | Latex-pH (nach Monomer-entfernung) | Gel-gehalt [Gew. %] | Quell-Index | Säure-Zahl [mg KOH/g Microgel] | OH-Zahl | Tg [°C] | Teilchen-durchmesser [nm] |
|---|---|---|---|---|---|---|---|---|
| 1 | 28,8 | 7,8 | 98 | 5,1 | - | - | -16 | 65 |
| 2 | 28,3 | 7,5 | 96 | 11,3 | 7,5 | 20,0 | 62 | 47 |

## Herstellung der erfindungsgemäßen Nanofiltrationsmembran mit Polymerteilchen Typ 1 bzw. mit Polymerteilchen Typ 2

Als Stützmembran wurde stark vernetztes Polyimid verwendet. Diese Membran wurde mit Hilfe einer Breitschlitzdüse im bead-coating Verfahren mit einer wässrigen Dispersion aus kautschukartigen Polymerteilchen der Typen 1 oder 2 beschichtet. Die Stützmembran wurde mit einer Geschwindigkeit von 2 m/min unter der Düse hergeführt. Der Abstand der Düse zur Stützmembran betrug 100 $\mu$m. Die Nassfilmdicke der Latex-Schicht wurde mit 30 $\mu$m abgeschätzt, woraus sich eine Trockenfilmdicke der trennaktiven Schicht von ca. 10 $\mu$m ergibt. Die Trocknung erfolgte bei Raumtemperatur unter Atmosphärendruck für ca. 30 Minuten. Es wurden Nanofiltrationsmembran Typ 1 (mit Polymerteilchen Typ 1) und Nanofiltrationsmembran Typ 2 (mit Polymerteilchen Typ 2) hergestellt.

Bei der erfindungsgemäßen Nanofiltrationsmembran Typ 2 wurde nach der Trocknung die Vernetzung der Polymerteilchen zusätzlich durchgeführt. Als Vernetzungsmittel wurde 1,6-Hexamethylendiisocyanat (HDI) verwendet. Zunächst wurde die Membran mit Aceton und nachfolgend n-Hexan gespült. Dann wurde eine Lösung von 2 Gew.-% HDI und 0,2 Gew.-% Dioctyl-Zinnlaureat in n-Hexan auf der Membran appliziert. Nach einer Reaktionszeit von 20 Minuten bei 25°C wurde die Reaktionslösung entfernt und die Membran mit Aceton gespült.

## Bestimmung der Filtrationseigenschaften

Die Filtrationseigenschaften der erfindungsgemäßen Nanofiltrationsmembranen wurden mit einem Modellsystem von Polystyrol-Oligomeren in verschiedenen Lösungsmitteln gemessen. Die Oligomere besaßen Molekulargewichte zwischen ca. 230 und 1100 g/mol. Nach dem Durchtritt von einer ausreichend großen Menge Permeat wurden Proben von Retentat und Permeat genommen und durch eine HPLC die jeweilige Konzentration der Oligmere chromatographisch bestimmt. Aus den resultierenden Konzentrationen der jeweiligen Oligomere lässt sich ihr Rückhalt durch die Membran und somit der Molecular Weight Cut-Off bestimmen.

## Filtrationseigenschaften der erfindungsgemäßen Nanofiltrationsmembran Typ 1

In Tabelle 4 sind die Werte für den Rückhalt von Polystyrol-Oligomeren durch eine erfindungsgemäße Nanofiltrationsmembran Typ 1 dargestellt, wobei die trennaktive Schicht aus Polymerteilchen Typ 1 besteht, die nicht zusätzlich vernetzt worden sind. Als Lösungsmittel wurde Aceton gewählt. Die Trennung der Styrololigomere fand bei 25°C und einem Druck von 30 bar statt. Der Durchfluss wurde mit 111/($m^2$ h) bestimmt.

**Tabelle 4:**

| Molekulargewicht / g/mol | Rückhalt / % |
|---|---|
| 236 | 21 |
| 295 | 38 |
| 395 | 56 |
| 495 | 67 |
| 595 | 74 |
| 685 | 81 |
| 795 | 83 |

(fortgesetzt)

| Molekulargewicht / g/mol | Rückhalt / % |
|---|---|
| 895 | 87 |
| 995 | 90 |

Die erfindungsgemäße Nanofiltrationsmembran hat somit im hier definierten Testsystem einen Cut-off von ca. 1000 g/mol, da hier ein 90%-iger Rückhalt gemessen worden ist. Somit ist die Membran für die Nanofiltration geeignet.

**Filtrationseigenschaften der erfindungsgemäßen Nanofiltrationsmembran Typ 2**

Tabelle 5 enthält Werte für den Rückhalt von Polystyrol-Oligomeren durch eine erfindungsgemäße Nanofiltrationsmembran Typ 2, wobei die trennaktive Schicht aus Polymerteilchen Typ 2 besteht, die durch 1,6-Hexamethylendiisocyanat zusätzlich vernetzt worden sind. Es sind die Werte für eine Filtration in drei verschiedenen Lösungsmitteln (Aceton, Tetrahydrofuran (THF) und Toluol) angegeben. Es wurden Durchflüsse von 7 bis 11 l/(m$^2$ h) gemessen bei einer Temperatur von 25°C und einem Druck von 30 bar.

**Tabelle 5:**

| Molekulargewicht / g/mol | LM: Toluol Rückhalt / % | LM: THF Rückhalt / % | LM: Aceton Rückhalt / % |
|---|---|---|---|
| 236 | - | 42 | 34 |
| 295 | 52 | 50 | 45 |
| 395 | 73 | 71 | 66 |
| 495 | 82 | 79 | 76 |
| 595 | 88 | 85 | 84 |
| 695 | 91 | 87 | 87 |
| 795 | 93 | 89 | 89 |
| 895 | 95 | 89 | 91 |
| 995 | 96 | 90 | 92 |
| 1095 | 96 | 91 | 93 |

Aus den hier dargestellten Messwerten ist zu erkennen, dass nach einer Vernetzung der Polymerteilchen der Cut-off dieser Membran bei 700 bis 800 g/mol liegt, so dass die Membran für die Nanofiltration verwendet werden kann. Die Werte sind nur geringfügig vom gewählten Lösungsmittel abhängig. Die erfindungsgemäßen Membranen haben in allen verwendeten Lösungsmitteln keine Auflösungserscheinungen gezeigt.

**Patentansprüche**

1.  Nanofiltrationsmembran mit einer porösen Stützmembran, **dadurch gekennzeichnet, dass** die Oberfläche der Stützmembran mit durch Emulsionspolymerisation hergestellten Polymerteilchen mit einem mittleren Teilchendurchmesser kleiner als 70 nm, bevorzugt zwischen 30 - 65 nm, besonders bevorzugt zwischen 40 - 50 nm, beschichtet ist.

2.  Nanofiltrationsmembran nach Anspruch 1, **dadurch gekennzeichnet, dass** die Stützmembran aus einem anorganischen oder organischen Material besteht.

3.  Nanofiltrationsmembran nach Anspruch 2, **dadurch gekennzeichnet, dass** die Porengröße der Stützmembran kleiner als 500 nm, bevorzugt kleiner als 100 nm und besonders bevorzugt kleiner als 50 nm aufweist.

4.  Nanofiltrationsmembran nach Anspruch 3, **dadurch gekennzeichnet, dass** die Porengröße der Stützmembran kleiner ist als der mittlere Teilchendurchmesser der Polymerteilchen.

**5.** Nanofiltrationsmembran nach Anspruch 4, **dadurch gekennzeichnet, dass** die Dicke der Stützmembran 5 bis 100 μm, bevorzugt 20 bis 80 μm und ganz besonders bevorzugt von 30 μm bis 60 μm aufweist.

**6.** Nanofiltrationsmembran nach Anspruch 5, **dadurch gekennzeichnet, dass** die durch Emulsionspolymerisation hergestellten Polymerteilchen kautschukartig sind.

**7.** Nanofiltrationsmembran nach Anspruch 6, **dadurch gekennzeichnet, dass** die kautschukartigen Polymerteilchen solche auf Basis von konjugierten Dienen wie Butadien, Isopren, 2-Chlorbutadien und 2,3-Dichlorbutadien, Vinylacetat, Styrol oder Derivate davon, 2-Vinylpyridin und 4-Vinylpyridin, Acrylnitril, Acrylamide, Methacrylamide, Tetrafluorethylen, Vinylidenfluorid, Hexafluorpropen, doppelbindungshaltige Hydroxy-, Epoxy-, Amino-, Carboxy-, und Ketoverbindungen.

**8.** Nanofiltrationsmembran nach Anspruch 7, **dadurch gekennzeichnet, dass** die Polymerteilchen eine Glasübergangstemperatur (Tg) von -85°C bis 150° C, bevorzugt - 75°C bis 110°C, besonders bevorzugt -70 °C bis 90°C, aufweisen.

**9.** Nanofiltrationsmembran nach Anspruch 8, **dadurch gekennzeichnet, dass** die durch Emulsionspolymerisation hergestellten Polymerteilchen mindestens teilweise vernetzt sind.

**10.** Nanofiltrationsmembran nach Anspruch 9, **dadurch gekennzeichnet, dass** die durch Emulsionspolymerisation hergestellten Polymerteilchen mindestens teilweise durch den Zusatz von polyfunktionellen Monomeren bei der Polymerisation funktionalisiert sind.

**11.** Nanofiltrationsmembran nach Anspruch 10, **dadurch gekennzeichnet, dass** die polyfunktionellen Monomere aus der Gruppe ausgewählt werden, die besteht aus: Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid), Triallyltrimellitat, Acrylate und Methacrylate von aliphatischen Aminen, Epoxiden und mehrwertigen, vorzugsweise 2-bis 4-wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit sowie ungesättigten Polyestern aus aliphatischen Di- und Polyolen und Maleinsäure, Fumarsäure, und/oder Itaconsäure.

**12.** Nanofiltrationsmembran nach Anspruch 11, **dadurch gekennzeichnet, dass** die Polymerteilchen eine annähernd kugelförmige Geometrie aufweisen.

**13.** Nanofiltrationsmembran nach Anspruch 12, **dadurch gekennzeichnet, dass** die Polymerteilchen in Toluol bei 23°C unlösliche Anteile von mindestens etwa 70 Gew.-%, bevorzugt mindestens etwa 80 Gew.-%, besonders bevorzugt 90 Gew.-%, noch bevorzugter mindestens etwa 98 Gew.-% aufweisen.

**14.** Nanofiltrationsmembran nach Anspruch 13, **dadurch gekennzeichnet, dass** die Polymerteilchen in Toluol bei 23°C einen Quellungsindex von weniger als etwa 80, bevorzugt 60 und besonders bevorzugt 40 aufweisen.

**15.** Nanofiltrationsmembran nach Anspruch 14, **dadurch gekennzeichnet, dass** die Schichtdicke der Nanofiltrationsmembran mindestens eine Monolage der Polymerteilchen mit dem mittleren Teilchendurchmesser kleiner als 70 nm, bevorzugt 30 - 65 nm, besonders bevorzugt 40 - 50 nm (trennaktive Schicht) aufweist.

**16.** Nanofiltrationsmembran nach Anspruch 15, **dadurch gekennzeichnet, dass** die trennaktive Schicht eine Schichtdicke von 0,1 μm bis 20 μm aufweist.

**17.** Nanofiltrationsmembran nach Anspruch 16, **dadurch gekennzeichnet, dass** die trennaktive Schicht maximal so dick ist wie die Dicke der Stützmembran.

**18.** Verfahren zur Herstellung einer Nanofiltrationsmembran mit einer porösen Stützmembran nach einem der vorgenannten Ansprüche, **dadurch gekennzeichnet, dass** eine Dispersion (Latex) von durch Emulsionspolymerisation hergestellten Polymerteilchen auf die Stützmembran aufgebracht und eine Polymerschicht (trennaktive Schicht) auf der Stützmembran ausgebildet wird.

**19.** Verfahren nach Anspruch 18, **dadurch gekennzeichnet, dass** das Verfahren kontinuierlich durchgeführt wird.

**20.** Verfahren nach Anspruch 19, **dadurch gekennzeichnet, dass** die Dispersion monodispers ist.

**21.** Verfahren nach Anspruch 20, **dadurch gekennzeichnet, dass** die Dispersion Polymerteilchen mit mittlerem Teilchendurchmesser kleiner als 70 nm, bevorzugt 30 - 60 nm, besonders bevorzugt 40 - 50 nm, aufweist, wobei der Trockenkautschukgehalt (Dry Rubber content) nach der Polymerisation mindestens 20 %, bevorzugt mindestens 25%, besonders bevorzugt mindestens 30% bezogen auf das Gesamtvolumen des Polymerisats, aufweist.

**22.** Verfahren nach Anspruch 21, **dadurch gekennzeichnet, dass** der Trockenkautschukgehalt (Dry Rubber content) nach der Polymerisation maximal 65% bezogen auf das Gesamtvolumen des Polymerisats beträgt.

**23.** Verfahren nach Anspruch 22, **dadurch gekennzeichnet, dass** das Aufbringen der Polymerteilchen mittels einer Düse durchgeführt wird.

**24.** Verfahren nach Anspruch 23 **dadurch gekennzeichnet, dass** die Nanofiltrationsmembran in einem nachfolgenden Schritt getrocknet wird.

**25.** Verfahren nach Anspruch 24, **dadurch gekennzeichnet, dass** die trennaktive Schicht der Nanofiltrationsmembran zusätzlich vernetzt wird.

**26.** Verwendung von durch Emulsionspolymerisation hergestellten Polymerteilchen mit mittleren Teilchendurchmesser kleiner als 70 nm, bevorzugt 30 - 60 nm, besonders bevorzugt 40 - 50 nm zur Herstellung einer Nanofiltrationsmembran nach einem der vorgenannten Ansprüche.

**27.** Verwendung der Nanofiltrationsmembran nach einem der vorgenannten Ansprüche für die Lebensmittelindustrie, die chemische Industrie, Biochemische Industrie.

Europäisches
Patentamt

European
Patent Office

Office européen
des brevets

**EUROPÄISCHER RECHERCHENBERICHT**

**Nummer der Anmeldung**

EP 11 15 3944

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 285 688 A1 (AUSIMONT SPA [IT] SOLVAY SOLEXIS SPA [IT]) 26. Februar 2003 (2003-02-26) * Zusammenfassung * * Absätze [0001], [0012], [0020] - [0023], [0030] - [0034], [0036], [0047], [0063], [0071] * * Examples * ----- | 1-14, 18-27 | INV. B01D71/26 B01D71/28 B01D71/32 B01D71/36 B01D71/40 B01D71/42 C08F2/22 B01D71/82 B01D67/00 |
| X | US 2002/092809 A1 (RIES PAUL D [US] ET AL) 18. Juli 2002 (2002-07-18) * Zusammenfassung * * Absätze [0005], [0007], [0015], [0016], [0017], [0018], [0024], [0032] - [0045], [0050], [0051] * * Tabelle II, * ----- | 1-27 | |
| X | DE 21 16 263 A1 (MILLIPORE CORP) 5. Januar 1972 (1972-01-05) * Zusammenfassung * * Seite 3, Zeilen 2,10-15 * * Ansprüche * * Seiten 5-7 * ----- | 1-27 | |
| X | US 5 075 011 A (WAITE WARREN A [US]) 24. Dezember 1991 (1991-12-24) * das ganze Dokument * ----- | 1-27 | RECHERCHIERTE SACHGEBIETE (IPC) B01D C08F |
| A | CN 101 824 118 A (UNIV HUAZHONG SCIENCE TECH) 8. September 2010 (2010-09-08) * Zusammenfassung * ----- | 1-27 | |
| A | US 2010/224555 A1 (HOEK ERIC M V [US] ET AL) 9. September 2010 (2010-09-09) * das ganze Dokument * ----- | 1-5 | |

Der vorliegende Recherchenbericht wurde für alle Patentansprüche erstellt

| Recherchenort | Abschlußdatum der Recherche | Prüfer |
|---|---|---|
| München | 18. Juli 2011 | Lançon, Eveline |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 15 3944

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-07-2011

| Im Recherchenbericht angeführtes Patentdokument | Datum der Veröffentlichung | Mitglied(er) der Patentfamilie | Datum der Veröffentlichung |
|---|---|---|---|
| EP 1285688 A1 | 26-02-2003 | DE 60206573 T2<br>IT MI20011745 A1<br>JP 4293765 B2<br>JP 2003128833 A<br>US 2005238813 A1<br>US 2003035898 A1 | 22-06-2006<br>10-02-2003<br>08-07-2009<br>08-05-2003<br>27-10-2005<br>20-02-2003 |
| US 2002092809 A1 | 18-07-2002 | KEINE | |
| DE 2116263 A1 | 05-01-1972 | FR 2099183 A5 | 10-03-1972 |
| US 5075011 A | 24-12-1991 | KEINE | |
| CN 101824118 A | 08-09-2010 | KEINE | |
| US 2010224555 A1 | 09-09-2010 | AU 2008302086 A1<br>CA 2700333 A1<br>EP 2209546 A1<br>JP 2010540215 A<br>WO 2009039467 A1 | 26-03-2009<br>26-03-2009<br>28-07-2010<br>24-12-2010<br>26-03-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5049167 A
- US 5302696 A
- US 5442009 A

**In der Beschreibung aufgeführte Nicht-Patentliteratur**

- Römpp Lexikon der Chemie. 1997, vol. 2
- **P. A. LOVELL ; M. S. EL-AASSER.** Emulsion Polymerization and Emulsion Polymers. John Wiley & Sons
- **H. GERRENS.** Fortschr. Hochpolym. Forsch. 1959, vol. 1, 234
- **H. G. MÜLLER.** *Colloid Polymer Science,* 1996, vol. 267, 1113-1116
- **W. SCHOLTAN ; H. LANGE.** *Kolloid-Z u. Z. Polymere,* 1972, vol. 250, 782
- **HOUBEN-WEYL.** Methoden der organischen Chemie. vol. 14/2, 848
- **MARON, S. H. ; MADOW, B. P. ; BORNEMAN, E.** The effective equivalent weights of some rosin acids and soaps. *Rubber Age,* April 1952, 71-72
- **MARON, S. H. ; ULEVITCH, I. N. ; ELDER, M. E.** Fatty and Rosin Acids, Soaps, and Their Mixtures. *Analytical Chemistry,* vol. 21 (6), 691-695
- *Analytical Chemistry,* vol. 21 (6), 691-695
- **MARON, S. H. ; MADOW, B. P. ; BORNEMAN, E.** The effective equivalent weights of some rosin acids and soaps. *Rubber Age,* 1952, vol. 71, 71-2